# EUROPÄISCHE PATENTSCHRIFT

(11) **EP 3 523 078 B1**
(45) Veröffentlichungstag und Bekanntmachung des Hinweises auf die Patenterteilung: **21.05.2025**
(21) Anmeldenummer: 17781432.4
(22) Anmeldetag: 28.09.2017
(51) Int. Cl.: B23D 47/02, B27G 19/10

(54) **TISCHSÄGE UND SPLITTERSCHUTZELEMENT**
TABLE SAW AND SPLINTER PROTECTION ELEMENT
SCIE DE TABLE ET PARE-ÉCLATS

(30) Priorität: 05.10.2016 DE 102016219255
(43) Veröffentlichungstag der Anmeldung: 14.08.2019
(73) Patentinhaber: Festool GmbH, 73240 Wendlingen (DE)
(72) Erfinder: ENDER, Dominic Richard, 72622 Nürtingen (DE)
(74) Vertreter: Patentanwälte Magenbauer & Kollegen Partnerschaft mbB
(86) Internationale Anmeldenummer: PCT/EP2017/074623
(87) Internationale Veröffentlichungsnummer: WO 2018/065291

(56) Entgegenhaltungen:
- EP-A1- 1 457 299
- EP-A1- 2 484 473
- DE-A1- 3 718 232
- DE-A1- 4 200 713
- DE-U1- 202004 009 123
- DE-U1- 29 809 921
- US-A- 1 590 974
- US-A1- 2003 233 926
- US-A1- 2009 007 743

## Beschreibung

Die Erfindung betrifft eine Tischsäge, vorzugsweise eine Tischkreissäge, mit einer auf einer Unterlage abstellbaren Stützstruktur, an deren Oberseite eine Werkstück-Auflageplatte vorgesehen ist, und mit einem über die Werkstück-Auflageplatte nach oben ragenden Sägeblatt.

Aus der Druckschrift DE 20 2004 00912 3 U1 ist eine Tischkreissäge bekannt, die eine Arbeitsplatte mit einer Auflagefläche, ein Gehäuse, welches die Arbeitsplatte trägt, und einen unterhalb der Arbeitsplatte angeordneten und mit dieser verbundenen Maschinenrahmen zur Aufnahme eines Motors und eines Sägeblatts umfasst.

Die DE 298 09 921 U1 beschreibt eine Führungsplatte, die dazu dient, mit ihrer Unterseite auf ein Werkstück aufgelegt zu werden. Eine Handwerkzeugmaschine, beispielsweise eine Handkreissäge, wird auf die Führungsplatten-Oberseite aufgesetzt und der Führungsplatte entlang in deren Längsrichtung bewegt. Die Führungsplatte weist einen Grundkörper auf, der aus einem geeigneten Metall besteht. Der Grundkörper trägt eine beim Gebrauch am Werkstück aufliegende Führungsleiste. Mit Hilfe der Führungsleiste und der von dieser gebildeten Führungslippe wird ein Aussplittern des Materials des Werkstücks vermieden.

Die US 1 590 974 A beschreibt einen Wetterstreifen zum Anbringen an Türen und Fensterrahmen. Der Wetterstreifen umfasst einen Longitudinal-Wulst und ein V-förmiges Longitudinal-Halteteil, mit dem der Wetterstreifen an die Tür oder den Fensterrahmen befestigt werden kann.

Aus der US 2009/0007743 A1 ist eine Tischsäge mit einer Basis, die eine Spindel zum auswechselbaren Befestigen von zwei oder mehr Sägeblättern aufweist, mit einer an der Basis befestigten Schiene, einem Träger, der gleitend auf der Schiene angeordnet ist, um ein Werkstück zu tragen, mit einer Tischplatte, die auf der Basis angeordnet ist und eine Öffnung aufweist, die den Sägeblättern zugewandt ist, und mit zwei oder mehr Einsätzen, die auswechselbar in die Öffnung der Tischplatte eingreifen können und eine Aussparung aufweisen, um Sägeblätter unterschiedlicher Breite oder Dicke einzupassen bekannt. Die Schiene ist vorzugsweise verschiebbar und verstellbar an der Basis befestigt.

Es ist eine Aufgabe der Erfindung, eine Tischsäge der eingangs genannten Art so zu modifizieren, dass mit einem möglichst einfachen Aufbau der Tischsäge das Risiko von Beschädigungen der Oberfläche eines Werkstücks bei der Handhabung und Bearbeitung des Werkstücks reduziert werden kann.

Die Aufgabe wird durch die im Kennzeichen des Anspruchs 1 angegebenen Merkmale gelöst. Erfindungsgemäß ist die Werkstück-Auflageplatte relativ zur Stützstruktur und zum Sägeblatt in Sägerichtung verschiebbar gelagert und verfügt über ein Splitterschutzelement, das an einer dem Sägeblatt zugewandten Seite der Werkstück-Auflageplatte angeordnet ist, die beim Verschieben der Werkstück-Auflageplatte am Sägeblatt vorbeigeführt wird.

Durch die relativ zum Sägeblatt verschiebbar gelagerte Werkstück-Auflageplatte wird es möglich, ein auf der Werkstück-Auflageplatte aufgelegtes Werkstück durch Verschieben der Werkstück-Auflageplatte an das Sägeblatt heranzuführen und/oder in das Sägeblatt hineinzuschieben. Auf diese Weise wird verhindert, dass das Werkstück über die Werkstück-Auflageplatte geschoben werden muss, wodurch das Risiko von Oberflächenbeschädigungen, wie beispielsweise Kratzern, an der auf der Werkstück-Auflageplatte aufliegenden Seite des Werkstücks verringert werden kann.

Durch das an der Werkstück-Auflageplatte vorgesehene Splitterschutzelement kann darüber hinaus das Risiko einer Beschädigung des Werkstücks durch Ausriss beim Sägen verringert werden. Da das Splitterschutzelement an der verschiebbaren Werkstück-Auflageplatte angeordnet ist und folglich mit der verschiebbaren Werkstück-Auflageplatte mitgeführt wird, kann gewährleistet werden, dass auch in verschiedenen Stellungen der Werkstück-Auflageplatte ein Splitterschutz zwischen der Werkstück-Auflageplatte und dem Sägeblatt gegeben ist.

Dadurch, dass das Splitterschutzelement direkt an der verschiebbaren Werkstück-Auflageplatte vorgesehen ist, ergibt sich ein einfacher Aufbau der Tischsäge. Insbesondere entfällt durch diese Maßnahme die Notwendigkeit, für das Splitterschutzelement eine dedizierte, ortsfest an der Stützstruktur angebrachte Halterungsstruktur zwischen dem Sägeblatt und der Werkstück-Auflageplatte vorzusehen. Folglich wird durch die Anbringung des Splitterschutzelements an der verschiebbaren Werkstück-Auflageplatte der Vorteil eines einfachen Aufbaus erzielt.

Vorteilhafte Weiterbildungen der Erfindung sind Gegenstand der Unteransprüche.

Vorzugsweise umfasst das Splitterschutzelement eine Splitterschutzlippe, insbesondere eine Splitterschutzgummilippe. Zweckmäßigerweise ist die Splitterschutzlippe länglich bzw. leistenförmig ausgebildet. Durch ein derart ausgebildetes Splitterschutzelement kann ein möglichst ausrissfreies Sägen gewährleistet werden.

In bevorzugter Ausgestaltung erstreckt sich das Splitterschutzelement vor das Sägeblatt, und zwar zweckmäßigerweise derart, dass das Splitterschutzelement bei der Inbetriebnahme der Tischsäge durch Verschieben der Werkstück-Auflageplatte vom Sägeblatt zugeschnitten wird. Durch diese Ausgestaltung des Splitterschutzelements wird erzielt, dass das Splitterschutzelement passgenau zugeschnitten werden kann, so dass später im Betrieb exakt an dem Sägeblatt anliegt und dadurch ein ausrissfreies Sägen des Werkstücks ermöglicht.

In bevorzugter Ausgestaltung ist das Splitterschutzelement abnehmbar an der Werkstück-Auflageplatte angebracht. Insbesondere ist das Splitterschutzelement derart an der Werkstück-Auflageplatte angebracht, dass es manuell, vorzugsweise ohne das Lösen einer Schraube oder einem sonstigen Befestigungselement, von der Werkstück-Auflageplatte abgenommen werden kann. Zweckmäßigerweise sind das Splitterschutzelement und die Werkstück-Auflageplatte derart ausgebildet, dass das Splitterschutzelement reversibel an die Werkstück-Auflageplatte angebracht und/oder von dieser abgenommen werden kann. Durch diese Ausgestaltung kann das Splitterschutzelement in sehr einfacher Weise ausgetauscht werden.

Zweckmäßigerweise ist an der dem Sägeblatt zugewandten Seite der Werkstück-Auflageplatte eine Nut vorgesehen, die einen Abschnitt des Splitterschutzelements aufnimmt. Zweckmäßigerweise mündet die Nut an einer Vorder- und/oder Rückseite der Werkstück-Auflageplatte aus. Das Splitterschutzelement kann somit in einfacher Weise aus der Nut herausgezogen werden und ist folglich besonders einfach von der Werkstück-Auflageplatte abnehmbar.

Gemäß einer bevorzugten Ausgestaltung ist das Splitterschutzelement länglich ausgebildet. Zweckmäßigerweise erstreckt sich das Splitterschutzelement über die gesamte dem Sägeblatt zugewandte Seite der Werkstück-Auflageplatte. Insbesondere sind die Länge und Anordnung des Splitterschutzelements derart gewählt, dass sich in jeder Position der Werkstück-Auflageplatte, in der sich die Werkstück-Auflageplatte im Bereich des Sägeblatts befindet und ein Sägen eines auf die Werkstück-Auflageplatte aufgelegten Werkstücks möglich ist, ein Abschnitt des Splitterschutzelements zwischen der Werkstück-Auflageplatte und dem Sägeblatt befindet, so dass auch in verschiedenen Stellungen der Werkstück-Auflageplatte ein ausrissfreies Sägen des Werkstücks erfolgen kann.

Vorzugsweise verfügt das Splitterschutzelement über ein pfeilförmiges Profil. Das pfeilförmigen Profil weist zweckmäßigerweise einen Pfeilkopfabschnitt und einen Schaftabschnitt auf. Der Schaftabschnitt ist insbesondere in der an der Werkstück-Auflageplatte vorgesehenen Nut untergebracht. Vorzugsweise befindet sich der Pfeilkopfabschnitt außerhalb der Nut und bildet eine Splitterschutzlippe.

Zweckmäßigerweise ist an einem distalen Ende des Schaftabschnitts eine vorzugsweise kreisförmig ausgebildete gegenüber dem Schaftabschnitt verdickte Eingriffsstruktur vorgesehen.

Die Eingriffsstruktur steht zweckmäßigerweise mit einer komplementär ausgebildeten Eingriffsstruktur der Werkstück-Auflageplatte bzw. der Nut in Eingriff und verhindert durch Formschluss, dass das Splitterschutzelement quer zur Sägerichtung von der Werkstück-Auflageplatte abgenommen werden kann. Durch diese Ausgestaltung wird gewährleistet, dass das Splitterschutzelement im Betrieb der Tischsäge ausreichend fest in der Nut sitzt und trotzdem relativ einfach von der Werkstück-Auflageplatte abgenommen werden kann, falls beispielsweise ein Austausch des Splitterschutzelements nötig ist.

Gemäß einer weiteren vorteilhaften Ausgestaltung verfügt die Tischsäge über Kopplungsmittel. Die Kopplungsmittel sind vorzugsweise dazu geeignet, in einem Zustand, in dem die Tischsäge zusammen mit wenigstens einem kastenförmigen Körper einen vertikalen Stapel bildet, eine lösbare, vertikal zugfeste Kopplung mit dem wenigstens einen kastenförmigen Körper bereitzustellen. Mithilfe der Kopplungsmittel kann die Tischsäge stabil in einem vertikalen Stapel untergebracht und in diesem transportiert werden. Dadurch wird die Handhabbarkeit und Transportierbarkeit der Tischsäge verbessert. Die vorstehend beschriebene Anbringung des Splitterschutzelements direkt an der verschiebbaren Werkstück-Auflageplatte ist insbesondere in diesem Kontext vorteilhaft, da sie, wie vorstehend bereits erwähnt, einen einfachen und damit möglichst kompakten Aufbau der Tischsäge ermöglicht. Zweckmäßigerweise entspricht die äußere Form der Tischsäge der Form einer Systemkiste, so dass die Tischsäge in einem Stapel aus Systemkisten untergebracht werden kann.

Eine beispielhafte Ausführungsform einer Tischsäge wird nachstehend unter Bezugnahme auf die Figuren beschrieben. Dabei zeigt
- Figur 1: eine perspektivische Ansicht einer Tischkreissäge mit ausgefahrener Werkstück-Auflageplatte und eingesetztem Splitterschutzelement,
- Figur 2: eine perspektivische Ansicht einer Tischkreissäge mit ausgefahrener Werkstück-Auflageplatte und abgenommenem Splitterschutzelement,
- Figur 3: eine Frontansicht einer Tischkreissäge mit abgenommenem Splitterschutzelement,
- Figur 4: eine perspektivische Ansicht einer Tischkreissäge mit Oberteil.

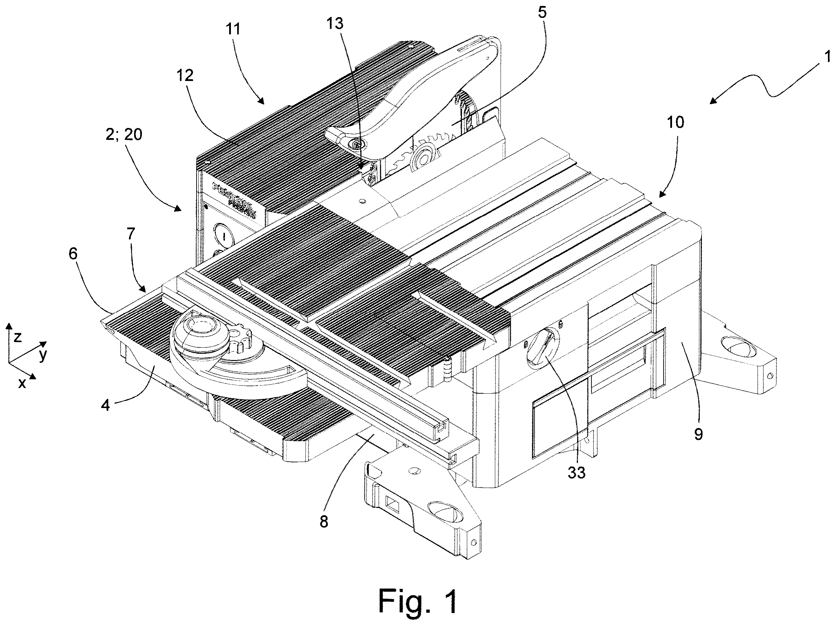

Die Figur 1 zeigt eine beispielhafte Ausführungsform einer Tischsäge 1. Die Tischsäge 1 ist exemplarisch als Tischkreissäge ausgebildet, kann alternativ aber auch als eine andere Tischsäge, beispielsweise als Tischstichsäge, ausgebildet sein.

Die Tischsäge 1 erstreckt sich in eine Vertikalrichtung, die parallel zu der in den Figuren eingezeichneten z-Achse verläuft, in eine Längsrichtung, die parallel zu der in den Figuren eingezeichneten x-Achse verläuft, und in eine Querrichtung, die parallel zu der in den Figuren eingezeichneten y-Achse verläuft. Die x-Achse, y-Achse und z-Achse sind orthogonal zueinander ausgerichtet.

Die Tischsäge 1 weist eine auf einer Unterlage abstellbare Stützstruktur 2 auf. An der Oberseite der Stützstruktur 2 ist eine Werkstück-Auflageplatte 4 vorgesehen. Ferner verfügt die Tischsäge 1 über ein über die Werkstück-Auflageplatte 4 nach oben ragendes Sägeblatt 5. Die Werkstück-Auflageplatte 4 ist relativ zur Stützstruktur 2 und zum Sägeblatt 5 in einer Sägerichtung y verschiebbar gelagert. Die Werkstück-Auflageplatte 4 verfügt über ein Splitterschutzelement 6. Das Splitterschutzelement 6 ist an einer dem Sägeblatt zugewandten Seite 7 der Werkstück-Auflageplatte 4 angeordnet. Die Seite 7 der Werkstück-Auflageplatte 4 wird beim Verschieben der Werkstück-Auflageplatte 4 am Sägeblatt 5 vorbeigeführt.

Durch diese Ausgestaltung der Tischsäge 1 wird die eingangs genannte Aufgabe gelöst, dass mit einem möglichst einfachen Aufbau der Tischsäge das Risiko von Beschädigungen der Oberfläche eines Werkstücks bei der Handhabung und Bearbeitung des Werkstücks reduziert werden kann.

Im Folgenden werden exemplarische Details der Tischsäge 1 näher erläutert.

Wie in der Figur 1 gezeigt, ist die Stützstruktur 2 kastenförmig ausgebildet. Die Stützstruktur 2 weist vier orthogonal zueinander ausgerichtete Umfangswände 8, 9, 10, 11 auf, die im Wesentlichen geschlossen sind. Die beiden Umfangswände 8 und 10 liegen in parallelen x-z-Ebenen und die beiden Umfangswände 9 und 11 in parallelen y-z-Ebenen. Es sei angemerkt, dass die Stützstruktur 2 alternativ auch anders ausgeführt sein kann; beispielsweise kann die Stützstruktur 2 auch als Beingestell ausgeführt sein.

An der Oberseite der Stützstruktur 2 ist die Werkstück-Auflageplatte 4 vorgesehen. Die Werkstück-Auflageplatte 4 weist eine rechteckige Auflagefläche auf, die in Gebrauchsstellung der Tischsäge 1 nach oben gewandt ist. Die Werkstück-Auflageplatte 4 liegt in einer x-y-Ebene und ist verschiebbar an der Stützstruktur 2 gelagert, so dass die Werkstück-Auflageplatte 4 relativ zur Stützstruktur 2 und relativ zum Sägeblatt 5 in die Sägerichtung y bzw. die y-Richtung verschoben werden kann.

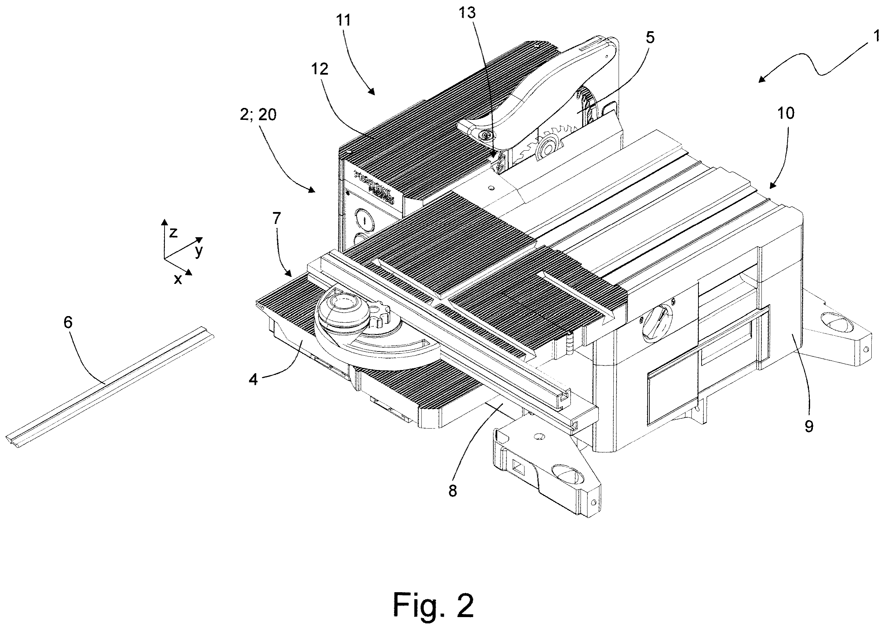

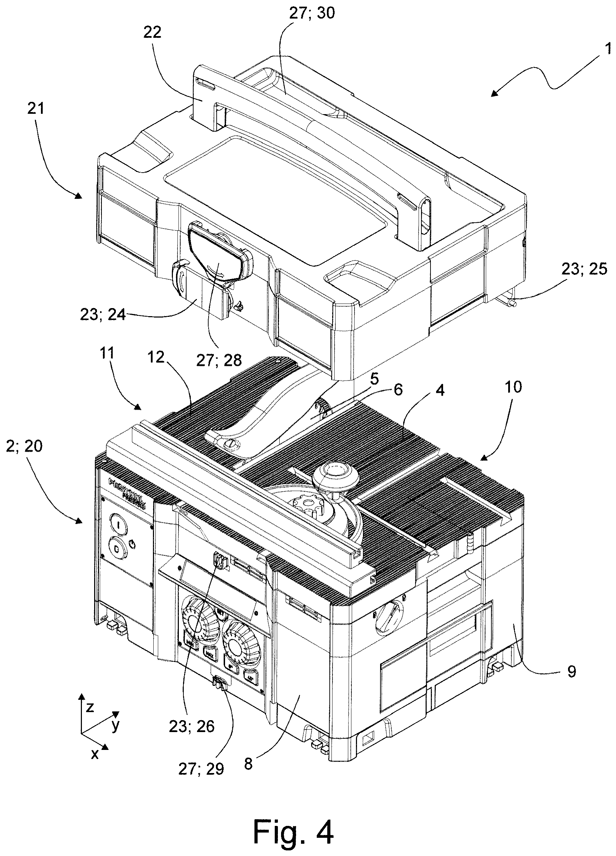

Die Werkstück-Auflageplatte 4 kann in y-Richtung relativ zur Stützstruktur 2 in verschiedene Stellungen versetzt werden. Die Figuren 1 und 2 zeigen die Werkstück-Auflageplatte 4 jeweils in einer ausgefahrenen Stellung. Zweckmäßigerweise liegt in der ausgefahrenen Stellung ein größter Teil der Werkstück-Auflageplatte 4 außerhalb einer horizontalen Außenkontur der kastenförmigen Stützstruktur 2. Die Figur 4 zeigt die Werkstück-Auflageplatte 4 hingegen in einer Transportstellung. In der Transportstellung ist die Werkstück-Auflageplatte 4 fluchtend zur horizontalen Außenkontur der Stützstruktur 2 angeordnet, so dass die Werkstück-Auflageplatte 4 und die Stützstruktur 2 zusammen einen kastenförmigen bzw. quaderförmigen Körper bilden, der nachstehend auch als Unterteil 20 bezeichnet wird.

Anhand einer nicht gezeigten Arretiereinrichtung kann die Werkstück-Auflageplatte 4 relativ zum Sägeblatt 5 bzw. zur Stützstruktur 2 fixiert werden. Die Fixierung lässt sich beispielsweise über einen an der Umfangswand 9 vorgesehenen Drehknopf 33 einstellen. Die Werkstück-Auflageplatte 4 kann insbesondere in einer Stellung fixiert werden, in der sie fluchtend zu der Stützstruktur 2 angeordnet ist.

An der Oberseite der Stützstruktur 2 ist das Sägeblatt 5 vorgesehen. Das Sägeblatt 5 greift durch eine in der Stützstruktur 2 vorgesehene Öffnung hindurch und ragt nach oben an der Werkstück-Auflageplatte 4 vorbei. Das Sägeblatt 5 liegt auf einer gedachten, in y-Richtung ausgerichteten Linie, die die Oberseite der Stützstruktur 2 in x-Richtung in zwei x-Bereiche unterteilt. In dem einen x-Bereich ist die verschiebbare Werkstück-Auflageplatte 4 vorgesehen. In dem anderen x-Bereich ist eine Auflageplatte 12 vorgesehen, die vorzugsweise ortsfest zur Stützstruktur 2 ausgebildet ist. Die verschiebbare Werkstück-Auflageplatte 4 und die Auflageplatte 12 nehmen vorzugsweise den selben z-Bereich ein, so dass sie in derselben x-z-Ebene liegen. In der Transportstellung der Werkstück-Auflageplatte 4 bilden die Werkstück-Auflageplatte 4 und die Auflageplatte 12 gemeinsam einen Körper, der eine im Wesentlichen rechteckige horizontale Außenkontur aufweist.

Das Sägeblatt 5 ist vorzugsweise in x-Richtung außermittig zur Oberseite der Stützstruktur 2 angeordnet, so dass die Werkstück-Auflageplatte 4 in x-Richtung länger ist als die Auflageplatte 12. Beispielsweise kann die Werkstück-Auflageplatte 4 in x-Richtung in etwa doppelt so lang wie die Auflageplatte 12 sein.

Die Oberseiten bzw. Auflageflächen der Werkstück-Auflageplatte 4 und der Auflageplatte 12 sind im gezeigten Beispiel mit Rillen versehen. Alternativ dazu kann die Oberseite der Werkstück-Auflageplatte 4 und/oder der Auflageplatte 12 auch ohne Rillen bzw. eben oder mit einer anderen Strukturierung versehen sein.

In Bezug auf die y-Richtung ist das Sägeblatt 5 in einem hinteren Bereich der Stützstruktur 2 angeordnet. Die Auflageplatte 12 weist in diesem Bereich eine rechteckige, sich in y-Richtung erstreckende Ausnehmung 13 auf. Gemäß einer in den Figuren nicht gezeigten Ausführungsform kann an der Auflageplatte 12, insbesondere in der Ausnehmung 13, ein Splitterschutzelement, beispielsweise eine Splitterschutzgummilippe, vorgesehen sein, und zwar insbesondere in dem y-Bereich, in dem sich das Sägeblatt 5 bzw. der Anschnittbereich des Sägeblatts 5 befindet.

Die Tischsäge 1 umfasst eine in den Figuren nicht gezeigte Antriebseinrichtung, beispielsweise einen Elektromotor und eventuell eine entsprechende Ansteuerelektronik, zum maschinellen Antrieb des Sägeblatts 5. Exemplarisch ist die Antriebseinrichtung vollständig in der Stützstruktur 2 angeordnet und an dieser betriebsbereit befestigt, so dass die Antriebseinrichtung bei der Bearbeitung des Werkstücks durch das von der Antriebseinrichtung angetriebene Sägeblatt 5 in der Stützstruktur 2 verbleibt.

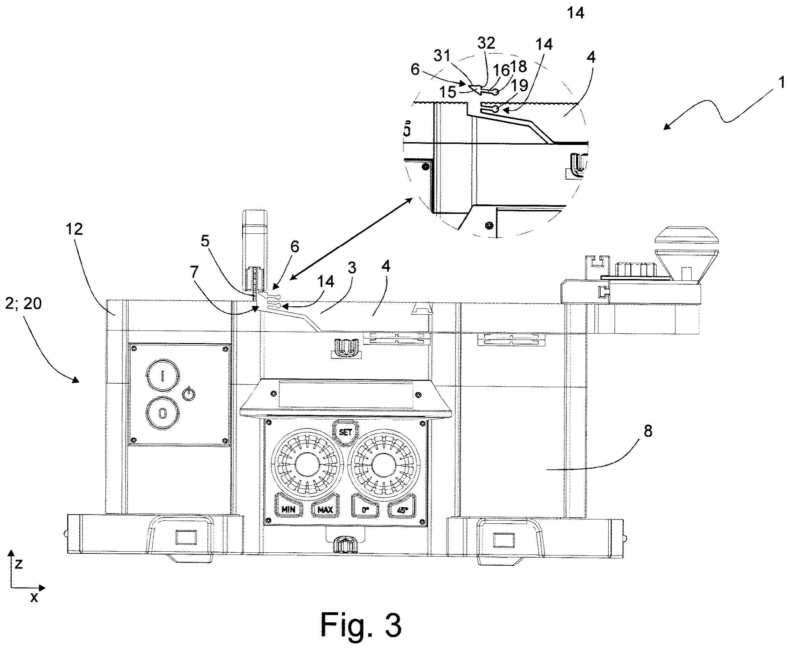

Das Splitterschutzelement 6 ist abnehmbar an der Werkstück-Auflageplatte 4 angebracht. Die Figuren 1 und 4 zeigen das Splitterschutzelement 6 in einem an der Werkstück-Auflageplatte 4 angebrachten Zustand, während die Figuren 2 und 3 das Splitterschutzelement 6 in einem Zustand zeigen, in dem es von der Werkstück-Auflageplatte 4 abgenommen ist.

In der Figur 2 ist das Splitterschutzelement 6 von der Werkstück-Auflageplatte 4 abgenommen. Wie in der Figur 2 gezeigt, weist das Splitterschutzelement eine Splitterschutzlippe auf, die sich in y-Richtung erstreckt. Das Splitterschutzelement 6 ist länglich bzw. stabförmig, insbesondere leistenförmig, ausgebildet. Das Splitterschutzelement ist beispielsweise aus Gummi oder einem anderen flexiblen Material gefertigt.

In dem gezeigten Ausführungsbeispiel erstreckt sich das Splitterschutzelement 6 über die gesamte dem Sägeblatt 5 zugewandte Seite 7 der Werkstück-Auflageplatte 4. Insbesondere erstreckt sich das Splitterschutzelement über die gesamte Breite der Stützstruktur 2 bzw. der Tischsäge 1. Alternativ zu der gezeigten Ausgestaltung kann das Splitterschutzelement 6 auch derart ausgebildet sein, dass es sich nicht über die gesamte Seite 7 der Werkstück-Auflageplatte 4 erstreckt. In diesem Fall ist es vorteilhaft, wenn sich das Splitterschutzelement 6 wenigstens über den y-Bereich der Werkstück-Auflageplatte 4 erstreckt, der in dem Anschnittbereich des Sägeblatts 5 positionierbar ist.

Die Figur 3 zeigt eine Frontansicht der Tischsäge 1. Ferner zeigt die Figur 3 eine Detailansicht der dem Sägeblatt 5 zugewandten Seite 7 der Werkstück-Auflageplatte 4.

Wie in der Figur 3 zu sehen, ist an der dem Sägeblatt 5 zugewandten Seite 7 der Werkstück-Auflageplatte 4 eine Nut 14 zur Aufnahme des Splitterschutzelement 6 vorgesehen. Bei der Seite 7 handelt es sich exemplarisch um eine vertikale Seitenfläche der Werkstück-Auflageplatte 4. Das Profil der Nut 14 erstreckt sich dementsprechend horizontal bzw. in x-Richtung in die Werkstück-Auflageplatte 4. Die Nut 14 ist komplementär zu einem Abschnitt des Splitterschutzelements 6 ausgebildet, so dass sie diesen Abschnitt aufnehmen kann. Die Nut 14 verläuft exemplarisch über die gesamte Breite der Werkstück-Auflageplatte 4; alternativ dazu kann die Nut 14 aber auch nur über einen Teil der Breite der Werkstück-Auflageplatte 4 verlaufen. Im gezeigten Beispiel mündet die Nut 14 an einer Vorderseite und einer Rückseite der Werkstück-Auflageplatte 4 aus.

Wie ebenfalls in der Figur 3 gezeigt, weist das Splitterschutzelement 6 ein pfeilförmiges Profil auf. Das Profil verfügt über einen Pfeilkopfabschnitt 15 und einen damit verbundenen Schaftabschnitt 16. Der Pfeilkopfabschnitt 15 verjüngt sich in x-Richtung hin zu dem Sägeblatt 5. Der Pfeilkopfabschnitt ist derart ausgebildet, dass eine obere Seitenfläche 31 des Pfeilkopfabschnitts 15 im eingesetzten Zustand des Splitterschutzelements 6 im Wesentlichen fluchtend zu der Auflagefläche der Werkstück-Auflageplatte 4 angeordnet ist. Die obere Seitenfläche 31 liegt in derselben x-z-Ebene wie die Auflagefläche der Werkstück-Auflageplatte 4. Der Pfeilkopfabschnitt 15 weist ein dreieckförmiges Profil auf, wobei die oberen Seitenfläche 31 ungefähr orthogonal zu einer dem Schaftabschnitt 16 zugewandten Seitenfläche 32 ausgerichtet ist.

An dem dem Pfeilkopfabschnitt 15 abgewandten distalen Ende des Schaftabschnitts 16 ist eine exemplarisch kreisförmig bzw. zylindrisch ausgebildete Eingriffsstruktur 18 vorgesehen. Die Eingriffsstruktur 18 ist gegenüber dem Schaftabschnitt 16 verdickt. Der Schaftabschnitt 16 ist komplementär zu der Nut 14 ausgebildet, so dass er in dieser untergebracht werden kann. Der Pfeilkopfabschnitt 15 befindet sich außerhalb der Nut 14 und bildet eine Splitterschutzlippe.

Die Nut 14 ist komplementär zu dem Schaftabschnitt 16 ausgebildet. Insbesondere weist die Nut 14 eine komplementär zu der Eingriffsstruktur 18 ausgebildete Eingriffsstruktur 19 auf, die in einem Zustand, in dem das Splitterschutzelement 6 an der Werkstück-Auflageplatte 4 angebracht ist, mit der Eingriffsstruktur 18 in Eingriff steht.

In dem gezeigten Ausführungsbeispiel der Figur 3 ist das Splitterschutzelement 6 derart dimensioniert, dass es sich nicht vor das Sägeblatt 5 erstreckt; d.h., dass es nicht denselben x-Bereich wie das Sägeblatt 5 einnimmt. Alternativ dazu kann das Splitterschutzelement 6 auch derart ausgebildet sein, dass es sich bis vor das Sägeblatt 5 erstreckt; d.h., dass es denselben x-Bereich wie das Sägeblatt einnimmt. Ist das Splitterschutzelement 6 in der letztgenannten Weise dimensioniert, so kann es bei der Inbetriebnahme der Tischsäge 5 durch Verschieben der Werkstück-Auflageplatte 4 in das Sägeblatt 5 geschoben werden. Auf diese Weise kann das Splitterschutzelement passgenau zugeschnitten werden.

In der Figur 3 ist ferner zu sehen, dass die Werkstück-Auflageplatte 4 in x-Richtung über einen Plattenabschnitt 3 verfügt, der sich hin zu dem Sägeblatt 5 verjüngt. An dem distalen Ende dieses Plattenabschnitts 3 befindet sich die vorstehend erwähnte Seite 7 bzw. die vertikale Seitenfläche, an der die Nut 14 vorgesehen ist. Im gezeigten Beispiel verjüngt sich der Plattenabschnitt 3 derart, dass die z-Erstreckung der Seite 7 im wesentlichen der maximalen z-Erstreckung des Splitterschutzelements 6 entspricht. Der dem Plattenabschnitt 3 zugehörige Teil der Auflagefläche der Werkstück-Auflageplatte 4 liegt dabei in derselben x-y-Ebene wie der restliche Teil der Auflagefläche der Werkstück-Auflageplatte 4.

Die Figur 4 zeigt die Tischsäge 1 in einer Konfiguration, in der die Tischsäge 1 zusätzlich zu dem Unterteil 20 ein Oberteil 21 aufweist. Das Oberteil 21 ist haubenförmig ausgebildet und weist einen Tragegriff 22 auf, der exemplarisch an der Oberseite des Oberteils 21 angeordnet ist. Das Oberteil 21 kann auf das Unterteil 20 aufgesetzt werden und lösbar, vertikal zugfest an das Unterteil 20 gekoppelt werden. Zu diesem Zweck weisen das Oberteil 21 und das Unterteil 20 entsprechende Kopplungsmittel 23 auf, wie beispielsweise einen Drehriegel 24, Laschen 25, eine nicht gezeigte Aufnahme für die Laschen 25 sowie eine Verriegelungsankerkontur 26. In einem Zustand, in dem das Oberteil 21 auf das Unterteil 20 aufgesetzt, weist die Tischsäge 1 eine im Wesentlichen kastenförmige bzw. quaderförmige Grundgestalt auf. Die äußere Form der Tischsäge 1 entspricht dann der einer Systemkiste.

Die Tischsäge 1 verfügt über weitere Kopplungsmittel 27, die dazu geeignet sind, in einem Zustand, in dem die Tischsäge 1 zusammen mit wenigstens einem in den Figuren nicht gezeigten kastenförmigen Körper einen vertikalen Stapel bildet, eine lösbare, vertikal zugfeste Kopplung mit dem wenigstens einen kastenförmigen Körper bereitzustellen.

Die Grundgestalt der Tischsäge 1 wird insbesondere durch die kastenförmige Stützstruktur 2 und das Oberteil 21 definiert. Vorzugsweise stellen die Außenflächen der Stützstruktur 2 und des Oberteils 21 das Gehäuse bzw. die äußeren Gehäuseflächen der Tischsäge 1 dar. Das Gehäuse bzw. die Grundgestalt der Tischsäge 1 weist insbesondere die Form einer Systemkiste auf. Systemkisten eines Systems verfügen über eine in dem System definierte Grundfläche und weisen in dem System definierte Kopplungsmittel auf, so dass Systemkisten eines Systems zu einem stabilen Stapel zusammengesetzt werden können. Systemkisten sind beispielsweise als modulare Werkzeugkästen zur Aufbewahrung von handgeführtem Elektrowerkzeug, Zubehör und/oder Verbrauchmaterialen weit verbreitet. Ist die Grundgestalt bzw. das Gehäuse der Tischsäge in der Form einer Systemkiste ausgebildet, so kann die transportable Bearbeitungseinheit in praktischer Weise in einem Stapel aus Systemkisten verstaut und transportiert werden.

Die Kopplungsmittel 27 umfassen insbesondere obere Kopplungsmittel, die an dem Oberteil 21 vorgesehen sind. Die oberen Kopplungsmittel sind dazu geeignet, in einem Zustand, in dem ein kastenförmiger Körper, wie beispielsweise eine weitere Tischsäge 1, auf die Tischsäge 1 gestapelt ist, eine lösbare, vertikal zugfeste Kopplung mit dem kastenförmigen Körper bereitzustellen. Die oberen Kopplungsmittel umfassen ein beweglich gelagertes Verriegelungselement 28. Im gezeigten Beispiel ist das Verriegelungselement 28 ein an dem Oberteil 21 drehbar gelagerter Drehriegel. Der Drehriegel ist an der Vorderwand des Oberteils 21 angeordnet. Die Drehachse des Drehriegels verläuft orthogonal zu der Vorderwand.

Zweckmäßigerweise umfassen die Kopplungsmittel 27 ferner untere Kopplungsmittel, die an dem Unterteil 20 vorgesehen sind. Die unteren Kopplungsmittel sind dazu geeignet, in einem Zustand, in dem die Tischsäge 1 auf einen kastenförmigen Körper, wie beispielsweise eine weitere Tischsäge 1, gestapelt ist, eine lösbare, vertikal zugfeste Kopplung mit dem kastenförmigen Körper bereitzustellen. Die unteren Kopplungsmittel umfassen wenigstens eine an dem Unterteil 20 ortsfest angeordnete Verriegelungsankerkontur 29. Die Verriegelungsankerkontur 29 befindet sich an der vorderen Umfangswand 8 des Unterteils 20. Die Verriegelungsankerkontur 29 ist als Verriegelungsvorsprung ausgebildet und steht von der Umfangswand 8 ab.

Das Verriegelungselement 28 und die Verriegelungsankerkontur 29 sind derart angeordnet und ausgebildet, dass bei zwei vertikal übereinander gestapelten Tischsägen 1 das Verriegelungselement 28 der einen Tischsäge 1 in Kopplungseingriff mit der Verriegelungsankerkontur 29 der anderen Tischsäge 1 gebracht werden kann.

Die Kopplungsmittel 27 können ferner Eingriffsstrukturen umfassen, die an der Unterseite und der Oberseite der Tischsäge 1 vorgesehen sind. Beispielsweise kann die Tischsäge 1 an der Oberseite des Oberteils 21 eine oder mehrere Eingriffsvertiefungen 30 und an der in den Figuren nicht gezeigten Unterseite des Unterteils 3 einen oder mehrere zu den Eingriffsvertiefungen entsprechend ausgebildete Eingriffsvorsprünge aufweisen. Die Eingriffsstrukturen können derart ausgebildet sein, dass sie zu der vertikal zugefesten Kopplung beitragen.

## Patentansprüche

1. Tischsäge (1), vorzugsweise Tischkreissäge, mit einer auf einer Unterlage abstellbaren Stützstruktur (2), an deren Oberseite eine Werkstück-Auflageplatte (4) vorgesehen ist, und mit einem über die Werkstück-Auflageplatte (4) nach oben ragenden Sägeblatt (5), **dadurch gekennzeichnet, dass** die Werkstück-Auflageplatte (4) relativ zur Stützstruktur (2) und zum Sägeblatt (5) in Sägerichtung (y) verschiebbar gelagert ist und über ein Splitterschutzelement (6) verfügt, das an einer dem Sägeblatt (5) zugewandten Seite (7) der Werkstück-Auflageplatte (4) angeordnet ist, die beim Verschieben der Werkstück-Auflageplatte (4) am Sägeblatt (5) vorbeigeführt wird, wobei an der dem Sägeblatt (5) zugewandten Seite der Werkstück-Auflageplatte (4) eine Nut (14) vorgesehen ist, die einen Abschnitt des Splitterschutzelements (6) aufnimmt.

2. Tischsäge (1) nach Anspruch 1, **dadurch gekennzeichnet, dass** das Splitterschutzelement (6) eine Splitterschutzlippe, vorzugsweise eine Splitterschutzgummilippe umfasst.

3. Tischsäge (1) nach Anspruch 1 oder 2, **dadurch gekennzeichnet, dass** sich das Splitterschutzelement (6) vor das Sägeblatt (5) erstreckt, so dass das Splitterschutzelement (6) bei der Inbetriebnahme der Tischsäge (1) durch Verschieben der Werkstück-Auflageplatte (4) vom Sägeblatt (5) zugeschnitten werden kann.

4. Tischsäge (1) nach einem der Ansprüche 1 bis 3, **dadurch gekennzeichnet, dass** das Splitterschutzelement (6) abnehmbar an der Werkstück-Auflageplatte (4) angebracht ist.

5. Tischsäge (1) nach einem der Ansprüche 1 bis 4, **dadurch gekennzeichnet, dass** die Nut (14) an einer Vorder- und/oder Rückseite der Werkstück-Auflageplatte (4) ausmündet.

6. Tischsäge (1) nach einem der Ansprüche 1 bis 5, **dadurch gekennzeichnet, dass** das Splitterschutzelement (6) länglich ausgebildet ist und sich vorzugsweise über die gesamte dem Sägeblatt (5) zugewandte Seite (7) der Werkstück-Auflageplatte (4) erstreckt.

7. Tischsäge (1) nach einem der Ansprüche 1 bis 6, **dadurch gekennzeichnet, dass** das Splitterschutzelement (6) über ein pfeilförmiges Profil mit einem Pfeilkopfabschnitt (15) und einem Schaftabschnitt (16) verfügt, wobei der Schaftabschnitt (16) in einer an der Werkstück-Auflageplatte (4) vorgesehenen Nut (14) untergebracht ist und sich der Pfeilkopfabschnitt (15) außerhalb der Nut (16) befindet und eine Splitterschutzlippe bildet.

8. Tischsäge (1) nach Anspruch 7, **dadurch gekennzeichnet, dass** an einem distalen Ende des Schaftabschnitts (16) eine vorzugsweise zylindrisch ausgebildete gegenüber dem Schaftabschnitt (16) verdickte Eingriffsstruktur (18) vorgesehen ist.

9. Tischsäge (1) nach Anspruch 8, **dadurch gekennzeichnet, dass** die Eingriffsstruktur (18) mit einer komplementär ausgebildeten Eingriffsstruktur (19) der Werkstück-Auflageplatte (4) in Eingriff steht und durch Formschluss verhindert, dass das Splitterschutzelement (6) quer zur Sägerichtung (y) von der Werkstück-Auflageplatte (4) abgenommen werden kann.

10. Tischsäge (1) nach einem der Ansprüche 1 bis 9, **gekennzeichnet durch** Kopplungsmittel (27), die dazu geeignet sind, in einem Zustand, in dem die Tischsäge (1) zusammen mit wenigstens einem kastenförmigen Körper einen vertikalen Stapel bildet, eine lösbare, vertikal zugfeste Kopplung mit dem wenigstens einen kastenförmigen Körper bereitzustellen.

11. Tischsäge (1) nach Anspruch 1, wobei das Splitterschutzelement (6) einen länglichen Körper mit einem pfeilförmigen Profil umfasst, das über einen Pfeilkopfabschnitt (15) und einen Schaftabschnitt verfügt 16(), wobei an einem distalen Ende des Schaftabschnitts (16) eine vorzugsweise kreisförmige bezüglich dem Schaftabschnitt verdickte Eingriffsstruktur (18) vorgesehen ist.

12. Tischsäge (1) nach einem voranstehenden Anspruch, wobei die Werkstück-Auflageplatte (4) in eine Transportstellung versetzbar ist, in der die Werkstück-Auflageplatte (4) fluchtend zur horizontalen Außenkontur der Stützstruktur (2) angeordnet ist, so dass die Werkstück-Auflageplatte (4) und die Stützstruktur (2) zusammen einen kastenförmigen Köper bilden.

13. Tischsäge (1) nach einem voranstehenden Anspruch, ferner umfassend eine Arretiereinrichtung, mit der die Werkstück-Auflageplatte (4) relativ zum Sägeblatt (5) und/oder zur Stützstruktur (2) fixiert werden kann.

14. Tischsäge (1) nach einem voranstehenden Anspruch, wobei das Sägeblatt (5) auf einer gedachten, in einer y-Richtung ausgerichteten Linie liegt, die eine Oberseite der Stützstruktur (2) in einer orthogonal zur y-Richtung verlaufenden x-Richtung in zwei x-Bereiche unterteilt, wobei die Werkstück-Auflageplatte (4) in einem der x-Bereiche vorgesehen ist und in dem anderen x-Bereich eine Auflageplatte (12) vorgesehen ist, wobei die Werkstück-Auflageplatte (4) und die Auflageplatte (12) in einer Transportstellung der Werkstück-Auflageplatte (4) gemeinsam einen Körper bilden, der eine im Wesentlichen rechteckige horizontale Außenkontur aufweist.

## Claims

1. Table saw (1), preferably a circular table saw, with a support structure (2) which can be placed on a support and on the upper side of which a workpiece support plate (4) is provided, and with a saw blade (5) which projects upwards over the workpiece support plate (4), **characterised in that** the workpiece support plate (4) is mounted in a sliding manner relative to the support structure (2) and to the saw blade (5) in the sawing direction (y) and **in that** it has a splinter protection element (6) which is arranged on a side (7) of the workpiece support plate (4) facing the saw blade (5) and which is guided past the saw blade (5) when the workpiece support plate (4) is slid, wherein a groove (14) is provided on the side of the workpiece support plate (4) facing the saw blade (5), which groove receives a portion of the splinter protection element (6).

2. Table saw (1) according to claim 1, **characterised in that** the splinter protection element (6) comprises a splinter protection lip, preferably a rubber splinter protection lip.

3. Table saw (1) according to claim 1 or 2, **characterised in that** the splinter protection element (6) extends in front of the saw blade (5) so that the splinter protection element (6) can be cut to size from the saw blade (5) by displacing the workpiece support plate (4) when the table saw (1) is put into operation.

4. Table saw (1) according to any one of claims 1 to 3, **characterised in that** the splinter protection element (6) is detachably attached to the workpiece support plate (4).

5. Table saw (1) according to any one of claims 1 to 4, **characterised in that** the groove (14) opens out at a front and/or rear side of the workpiece support plate (4).

6. Table saw (1) according to any one of claims 1 to 5, **characterised in that** the splinter protection element (6) is elongated and preferably extends over the entire side (7) of the workpiece support plate (4) facing the saw blade (5).

7. Table saw (1) according to any one of claims 1 to 6, **characterised in that** the splinter protection element (6) has an arrow-shaped profile with an arrowhead section (15) and a shaft section (16), wherein the shaft section (16) is accommodated in a groove (14) provided on the workpiece support plate (4) and the arrowhead section (15) is located outside the groove (16) and forms a splinter protection lip.

8. Table saw (1) according to claim 7, **characterised in that** a preferably cylindrically formed engagement structure (18) thickened relative to the shaft section (16) is provided at a distal end of the shaft section (16).

9. Table saw (1) according to claim 8, **characterised in that** the engagement structure (18) is in engagement with a complementary engagement structure (19) of the workpiece support plate (4) and prevents the splinter protection element (6) from being removed from the workpiece support plate (4) transversely to the sawing direction (y) by positive locking.

10. Table saw (1) according to any one of claims 1 to 9, **characterised by** coupling means (27) suitable to provide, in a state in which the table saw (1) together with at least one box-shaped body forms a vertical stack, a releasable vertically tension-proof coupling with the at least one box-shaped body.

11. Table saw (1) according to claim 1, wherein the splinter protection element (6) comprises an elongated body with an arrow-shaped profile, which has an arrowhead section (15) and a shaft section (16), wherein a preferably circular engagement structure (18) thickened with respect to the shaft section is provided at a distal end of the shaft section (16).

12. Table saw (1) according to a preceding claim, wherein the workpiece support plate (4) can be brought into a transport position in which the workpiece support plate (4) is aligned with the horizontal outer contour of the support structure (2) so that the workpiece support plate (4) and the support structure (2) together form a box-shaped body.

13. Table saw (1) according to a preceding claim, further comprising a locking device by means of which the workpiece support plate (4) can be fixed relative to the saw blade (5) and/or to the support structure (2).

14. Table saw (1) according to a preceding claim, wherein the saw blade (5) lies on an imaginary line extending in a y-direction, which divides an upper side of the support structure (2) in an x-direction, running orthogonally to the y-direction, into two x-regions, wherein the workpiece support plate (4) is provided in one of the x-regions and a support plate (12) is provided in the other x-region, wherein the workpiece support plate (4) and the support plate (12) in a transport position of the workpiece support plate (4) together form a body having a substantially rectangular horizontal outer contour.

## Revendications

1. Scie de table (1), de préférence scie circulaire de table, avec une structure de support (2) pouvant être posée sur un support, sur la face supérieure de laquelle est prévue une plaque d'appui de pièce (4), et avec une lame de scie (5) dépassant vers le haut de la plaque d'appui de la pièce (4), **caractérisée en ce que** la plaque d'appui de la pièce (4) est montée de manière à pouvoir coulisser par rapport à la structure de support (2) et à la lame de scie (5) dans la direction de sciage (y) et dispose d'un élément pare-éclats (6), qui est disposé sur une face (7) de la plaque d'appui de pièce (4) tournée vers la lame de scie (5), laquelle est guidée le long de la lame de scie (5) lors du coulissement de la plaque d'appui de pièce (4), dans laquelle est prévue, sur la face de la plaque d'appui de pièce (4) tournée vers la lame de scie (5), une rainure (14) qui reçoit une section de l'élément pare-éclats (6).

2. Scie de table (1) selon la revendication 1, **caractérisée en ce que** l'élément pare-éclats (6) comprend une lèvre pare-éclats, de préférence une lèvre pare-éclats en caoutchouc.

3. Scie de table (1) selon la revendication 1 ou 2, **caractérisée en ce que** l'élément pare-éclats (6) s'étend devant la lame de scie (5) de telle sorte que l'élément pare-éclats (6) peut être découpé à la bonne dimension par la lame de scie (5) lors de la mise en service de la scie de table (1) en déplaçant par coulissement la plaque d'appui de pièce (4).

4. Scie de table (1) selon l'une quelconque des revendications 1 à 3, **caractérisée en ce que** l'élément pare-éclats (6) est fixé de manière à pouvoir être retiré sur la plaque d'appui de pièce (4).

5. Scie de table (1) selon l'une quelconque des revendications 1 à 4, **caractérisée en ce que** la rainure (14) débouche sur une face avant et/ou arrière de la plaque d'appui de pièce (4).

6. Scie de table (1) selon l'une quelconque des revendications 1 à 5, **caractérisée en ce que** l'élément pare-éclats (6) est réalisé de manière allongée et s'étend de préférence sur la totalité de la face (7) de la plaque d'appui de pièce (4) tournée vers la lame de scie (5).

7. Scie de table (1) selon l'une quelconque des revendications 1 à 6, **caractérisée en ce que** l'élément pare-éclats (6) dispose d'un profil en forme de flèche avec une section de tête de flèche (15) et une section de tige (16), dans laquelle la section de tige (16) est logée dans une rainure (14) prévue sur la plaque d'appui de pièce (4) et la section de tête de flèche (15) se forme à l'extérieur de la rainure (16) et forme une lèvre pare-éclats.

8. Scie de table (1) selon la revendication 7, **caractérisée en ce qu'**une structure de prise (18) réalisée de préférence de manière cylindrique, épaissie par rapport à la section de tige (16) est prévue sur une extrémité distale de la section de tige (16).

9. Scie de table (1) selon la revendication 8, **caractérisée en ce que** la structure de prise (18) est en prise avec une structure de prise (19), réalisée de manière complémentaire, de la plaque d'appui de pièce (4) et empêche par complémentarité de forme que l'élément pare-éclats (6) puisse être retiré de la plaque d'appui de pièce (4) de manière transversale à la direction de sciage (y).

10. Scie de table (1) selon l'une quelconque des revendications 1 à 9, **caractérisée par** des moyens de couplage (27), qui sont adaptés pour fournir, dans un état dans lequel la scie de table (1) forme un empilement vertical conjointement avec au moins un corps en forme de caisson, un couplage amovible résistant verticalement à la traction avec l'au moins un corps en forme de caisson.

11. Scie de table (1) selon la revendication 1, dans laquelle l'élément pare-éclats (6) comprend un corps allongé présentant un profil en forme de flèche, qui dispose d'une section de tête de flèche (15) et d'une section de tige (16), dans laquelle une structure de prise (18) de préférence circulaire épaissie par rapport à la section de tige est prévue sur une extrémité distale de la section de tige (16).

12. Scie de table (1) selon l'une des revendications précédentes, dans laquelle la plaque d'appui de pièce (4) peut être déplacée dans une position de transport dans laquelle la plaque d'appui de pièce (4) est disposée en alignement avec le contour extérieur horizontal de la structure de support (2) de telle sorte que la plaque d'appui de pièce (4) et la structure de support (2) forment ensemble un corps en forme de caisson.

13. Scie de table (1) selon l'une des revendications précédentes, comprenant en outre un dispositif de blocage, avec lequel la plaque d'appui de pièce (4) peut être fixée par rapport à la lame de scie (5) et/ou à la structure de support (2).

14. Scie de table (1) selon l'une des revendications précédentes, dans laquelle la lame de scie (5) se trouve sur une ligne imaginaire orientée dans une direction y, qui divise une face supérieure de la structure de support (2) dans une direction x s'étendant de manière orthogonale à la direction y en deux zones x, dans laquelle la plaque d'appui de pièce (4) est prévue dans une des zones x et une plaque d'appui (12) est prévue dans l'autre zone x, dans laquelle la plaque d'appui de pièce (4) et la plaque d'appui (12) forment ensemble dans une position de transport de la plaque d'appui de pièce (4) un corps qui présente un contour extérieur sensiblement rectangulaire.
